# EUROPEAN PATENT APPLICATION

(11) **EP 3 951 209 A1**
(43) Date of publication of application: **09.02.2022**
(21) Application number: 20189357.5
(22) Date of filing: 04.08.2020
(51) Int. Cl.: F16F 9/512, F16F 9/19

(54) **VALVE ARRANGEMENT FOR PROVIDING IMPROVED DAMPING FORCE CHARACTERISTICS AT HIGHER STROKE SPEEDS IN A SHOCK ABSORBER**

(71) Applicant: Öhlins Racing AB, 194 27 Upplands Väsby (SE)
(72) Inventor: Hansson, Erik, 194 27 Upplands Väsby (SE)
(74) Representative: AWA Sweden AB

(57) **Abstract**

The present disclosure relates to a valve arrangement (1) for a shock absorber (100) with improved damping force characteristics, in particular at high stroke speeds. The valve arrangement (1) comprises: a compression valve (10A) configured to be fluidly connected to a compression chamber (100C) of a shock absorber (100), the compression valve (10A) including a first pressure responsive valve (10A1) and a first throttling passage (10A2) fluidly arranged in parallel with the first pressure responsive valve (10A1); a serial valve (10B) fluidly connected in series with the compression valve (10A) and configured to be fluidly connected to a reservoir (140) of the shock absorber (100), the serial valve (10B) including a second pressure responsive valve (10B1) and a second throttling passage (10B2) fluidly arranged in parallel with the second pressure responsive valve (10B1). Further, a shock absorber comprising such a valve arrangement (1) is disclosed, as well as a method for controlling a fluid flow in a shock absorber (100) from a compression chamber towards a reservoir (140).

## Description

### Technical Field

The present disclosure relates to a valve arrangement for a shock absorber and in particular a valve arrangement for providing improved damping force characteristics at higher stroke speeds in a shock absorber.

### Background

In conventional solutions, a compression valve is fluidly arranged in-between a compression chamber of a shock absorber and a reservoir. The compression valve is usually configured to provide a reasonable compromise between a safe shock absorber that does not cavitate in the higher stroke velocities and a performance characteristic suitable for the application. To enable the user to adjust the damping characteristics an outside adjuster is sometimes incorporated in the arrangement to allow a user to adjust a bleed valve arranged in parallel with the main valve. Such a parallel bleed valve typically only effects the damping characteristics of the low stroke speeds 0-2 m/s. However, in a high stroke speed range, e.g. of 2 - 4 m/s or more, it is desirable to provide a rapidly increased damping force. This is impossible to achieve with such a convention solution, and thus solutions for this particular problem have been proposed albeit not with entirely satisfactory results.

One solution involves spring-biasing the shim stack of the compression valve. By this, the compression valve may be configured to provide increased damping force at higher stroke speeds. However, this also introduces a rapid pressure build up at low to intermediate stroke speeds, which commonly results in uncontrolled force spikes.

Other solutions incorporate a bleed valve specifically designed to provide an increased pressure build up in the high stroke speed range. When configured accordingly, a rapidly increased damping force at high stroke speed range may be enabled without introducing unwanted damping force characteristics in the low to intermediate stroke speed range. A problem with this type of solution, however, is related to the fact that the bleed valve introduces a rapidly growing damping force in the high stroke speed range which at increasingly higher stroke speeds may also introduce uncontrolled force spikes.

Thus, there is a need for an improved valve arrangement for a shock absorber which is able to provide improved damping force characteristics at higher stroke speeds.

### Summary

It is an object of the present invention to provide an improved solution that alleviates the mentioned drawbacks with present solutions. Furthermore, it is an object to provide a valve arrangement for a shock absorber which is able to provide improved damping force characteristics at higher stroke speeds. Moreover, it is an object to provide a shock absorber incorporating such a valve arrangement and it is also an object to provide a corresponding method of controlling a fluid flow in a shock absorber to provide improved damping force characteristics at higher stroke speeds.

The invention is based on the inventor's realization that the above objective may be achieved by incorporating a serial valve with certain valve elements fluidly in series with compression valve. The certain valve elements of the serial valve include a pressure responsive valve and a throttling passage fluidly arranged in parallel with the pressure responsive valve. During a compression stroke of the shock absorber, the fluid flow from the compression valve passes thereafter into the serial valve, through the throttling passage until the pressure build-up provided by the throttling valve is of such magnitude that the pressure responsive valve opens or opens more, thereby mitigating further pressure build-up. Thus, the damping force characteristics of the present invention is characterized by a region of rapidly increasing damping force towards the high stroke speed interval, and after said region the damping force increases more slowly with increasing stroke speed. By modifying the specifications of the valve elements in the serial valve, these regions of rapidly increasing damping force and less rapidly increasing damping force may be adjusted in terms of at what predetermined pressure threshold these regions initiate, the width of the regions, and the damping force change provided in these regions.

According to a first aspect of the invention, this is provided by a valve arrangement for a shock absorber. The valve arrangement comprises a compression valve configured to be fluidly connected to a compression chamber of a shock absorber. The compression valve includes a first pressure responsive valve and a first throttling passage fluidly arranged in parallel with the first pressure responsive valve. The valve arrangement comprises a serial valve fluidly connected in series with the compression valve. The serial valve is configured to be fluidly connected to a reservoir of the shock absorber. The serial valve includes a second pressure responsive valve and a second throttling passage fluidly arranged in parallel with the second pressure responsive valve.

Hereby, when the valve arrangement is arranged accordingly to a shock absorber, the damping force characteristics of a shock absorber may be characterized in terms of, at successively increasing stroke speeds: a first region of a rapidly increasing damping force; a second region of less rapidly increasing damping force; a third region of rapidly increasing damping force and a fourth region of less rapidly increasing damping force.

The characteristics of the first damping force region is due to the fluid flow at low stroke speeds being throttled by the first throttling passage of the compression valve. As the stroke speed increases, the pressure builds up rapidly, consequently resulting in the damping force increasing rapidly in the first damping force region. The pressure continues to build-up rapidly to a first predetermined pressure threshold at which the first pressure responsive valve is configured to open or configured to open a greater extent.

In the second damping force region, the first pressure responsive valve mitigates the further pressure build-up so that the pressure builds less rapidly relative the pressure build-up in the first damping force region. This consequently slows the damping force increase in the second damping force region as compared to the damping force increase in the first damping force region.

The characteristics of the third damping force region is due to the fluid flow being throttled by the second throttling passage of the serial valve, the effect of which becomes significant at a second predetermined pressure level and which effect consequently leads to a rapid pressure build-up and thereby a rapidly increasing damping force in the third damping force region. The pressure continues to build rapidly until a third predetermined pressure threshold is reached at which the second pressure responsive valve is configured to open or configured to open a greater extent.

In the fourth damping force region, the second pressure responsive valve mitigates the further pressure build-up so that the pressure builds less rapidly relative the pressure build-up in the third damping force region. This consequently slows the damping force increase in the fourth damping force region as compared to the damping force increase in the third damping force region.

Thus, the current valve arrangement enables a solution that may prevent a runaway damping force in the high or higher stroke speed interval, and also provide overall improved damping force characteristics in the high stroke speed interval, without sacrificing desired damping force characteristics in the low- to intermediate stroke speed intervals. Moreover, since the runaway damping force at higher stroke speeds is mitigated, the present invention provides a solution to the uncontrolled force spikes present in conventional solutions.

In the context of the application, "pressure responsive valve" should be understood as a valve adapted to enable a larger flow-through opening in response to a change in pressure. It may refer to a valve adapted to enable a larger flow-through opening in response to an increase in pressure. Further, it may mean a valve adapted to be actuated, in response to a change in pressure, from a closed state to an open state. Examples of pressure responsive valves may include shim stacks, poppet valves etc.

In the context of the application, low-, intermediate- and high stroke speeds may be primarily regarded as stroke speeds in the intervals of 0-1 m/s, 1-2 m/s and 2-4 m/s, respectively. Further, stroke speeds of more than 4 m/s may be regarded as included in the high stroke speed interval.

In the context of the application, "arranged in series" should be understood as an object A and an object B being arranged such that they are fluidly coupled to each other. The wording "fluidly coupled" should be understood as an object A being coupled to an object B by any coupling means such as a channel, pipe, hose or other connection means through which a fluid may flow. The coupling may be direct coupling, or it may be indirect coupling. Also, in the context of the application, an object A being "fluidly arranged between" objects B and C should be understood as that the placing of object A is between object B and object C, in the fluid path running between objects B and C. Thus, object A does not need to be "fluidly arranged" as in floating.

In the context of the application, "open state" should be understood as an object A being configured to allow damping fluid to flow through it. Also, "closed state" should be understood as an object A being configured to prevent a damping fluid to flow through it.

In the context of the application, "compression stroke" should be understood as the movement of the piston head when it moves towards the compression chamber. Also, "rebound stroke" should be understood as the movement of the piston head when it moves towards the rebound chamber.

According to one embodiment, at least one of the first and second pressure responsive valves is a spring-loaded poppet valve or a shim stack. The first pressure responsive valve may be a spring-loaded poppet valve or a shim stack. The second pressure responsive valve may be a spring-loaded poppet valve or a shim stack. Both the first and the second pressure responsive valves may be a spring-loaded poppet valve or a shim stack. The first pressure responsive valve may be a spring-loaded poppet valve and the second pressure responsive valve may be a shim stack. The first pressure responsive valve may be a shim stack and the second pressure responsive valve may be a spring-loaded poppet valve. The spring-loaded poppet valve or shim stack constituting the first pressure responsive valve may be configured to open or open a greater extent at the first predetermined pressure threshold. The spring-loaded poppet valve or shim stack constituting the second pressure responsive valve may be configured to open or open a greater extent at the third predetermined pressure threshold.

According to one embodiment, any one of both of the first and second pressure responsive valves is a spring loaded shim stack.

According to one embodiment, both the first and second pressure responsive valve are a respective first and second shim stack. By this, the valve arrangement may provide a desired damping force characteristic more reliably. Moreover, this may be preferable depending on the desired layout of the valve arrangement since the space available may be more restricted in certain directions than in others.

According to one embodiment, the first pressure responsive valve is configured to open at a first predetermined pressure threshold and the second pressure responsive valve is configured to open at a second predetermined pressure threshold, wherein the second predetermined pressure threshold is larger than the first predetermined pressure threshold. By this, the second pressure responsive valve may open or open to a greater extent only when the first pressure responsive valve has already been opened or opened to a greater extent.

According to one embodiment, the second throttling passage is provided to enable a cross-sectional flow that is larger than the cross-sectional flow enabled by the first throttling passage. By enabling a greater cross-sectional flow, the second throttling passage may be adapted to allow fluid flow from both the first throttling passage and the first pressure responsive valve. The second throttling passage may be provided to enable a cross-sectional flow that is 10% - 200%, 10% - 100, or 10% - 50% larger than the cross-sectional flow enabled by the first throttling passage.

According to one embodiment, at least one of the first and second throttling passages is provided by an adjustable bleed valve comprising a valve member axially moveable along a respective longitudinal axis relative a valve seat. By axially moving the valve member relative the valve seat, the throttling passage defined there-between may be adjusted in terms of size. The valve member may be adjustable axially relative the valve seat between a closed state at which state the throttling passage is fully closed and an open state wherein the throttling passage is maximally open. Moreover, the adjustable bleed valve may be pressure independently adjustable, meaning for any selected adjustment, it is maintained irrespective of the pressure. By being adjustable, the first and/or second throttling passages may be adjusted in terms of orifice size so that the characteristics of the damping force in the first or third damping force region respectively may be adjusted to a desired characteristic. Said valve member may be rotatably arranged so that when rotated, it moves axially towards or away from the valve seat. The valve member may be adjusted by means of a rotatable knob arranged to the exterior of the valve arrangement. By rotating the rotatable knob, the valve member may be adjusted in terms of axial position along the longitudinal axis relative the valve seat, thereby moving closer or farther away from it. The valve member may be rotatably coupled to the rotatable knob, so that it rotates axially toward or away from the valve seat. The axial position of the valve member relative the valve seat determines the orifice size of the throttling passage.

According to one embodiment, both the first and second throttling passages are provided by a respective first and second adjustable bleed valve comprising a valve member axially moveable about a respective first and second longitudinal axis relative a respective first and second valve seat. By this, both the first and the second throttling passages may be adjusted in terms of orifice size so that the characteristics of the damping force in the first and third damping force region respectively may be adjusted to a desired characteristic. Both the first and second adjustable bleed valve may be configured to be adjusted by means of rotatable knobs arranged to the exterior of the valve arrangement. The first and/or the second adjustable bleed valves may be configured to be electromechanically operated.

According to one embodiment, the first and second adjustable bleed valves are provided so that the first and second longitudinal axes are parallel. By this, the valve arrangement may result in a more compact solution. In an alternative solution, the first and second adjustable bleed valve may be provided so that the first and second longitudinal axes are perpendicular.

According to one embodiment, at least one adjustable bleed valve is configured to be maintained in any of a predetermined set of adjusting positions by means of a ball spring. The valve members of the first and/or second adjustable bleed valve may be provided with grooves, slots, or recesses for receiving the ball of the ball spring. The ball spring may be arranged in a cavity adjacent to an auxiliary channel, e.g. a bleed flow channel. The ball spring may be configured to extend out of said cavity towards the valve member into a groove, slot, or recess of the valve member. The groove, slot, or recess may extend along a surface of the valve member in a direction parallel to the longitudinal axis. Both the first and the second adjustable bleed valve may be configured to be maintained in any of a predetermined first and second set of adjusting positions by means of a respective ball spring. The predetermined first and second set of adjusting positions may be defined by the number of grooves, slots or recesses arranged in a circumferential direction of a valve member.

According to one embodiment, the valve arrangement comprises a rebound chamber port fluidly provided in-between the compression valve and the serial valve and configured to enable fluid connection to a rebound chamber of the shock absorber. During rapid stroke accelerations, the pressure build-up may be of such magnitude that a greater fluid flow than just a displacement flow caused by the piston rod may flow through the compression valve. However, this excess flow caused by the pressure shockwave may be allowed to return to the rebound chamber via the rebound chamber port. Thus, only the displacement fluid flow may flow into the serial valve and thus the valve arrangement may operate more accurately to a desired damping force characteristic. Further, the risk of uncontrolled force spikes may be reduced by this.

According to one embodiment, the valve arrangement comprises a first check valve fluidly arranged in parallel with the compression valve. By this, the fluid flow may be enabled to return to the compression chamber from the reservoir in a facilitated and controlled manner.

According to one embodiment, the valve arrangement comprises a housing defining a compression chamber port, a reservoir port, a first and a second parallel channel extending between the compression chamber port and the reservoir port respectively, wherein the compression valve is fluidly arranged in the first channel and the first check valve is arranged to allow fluid flow through the second channel at a predetermined first pressure level. The first check valve may be spring-biased and configured to open at a predetermined pressure level. The first check valve may be configured to open so that the fluid flow may flow from the reservoir port to the compression chamber port. The first check valve may be configured to be axially displaceable in parallel with the first longitudinal axis. The first check valve may be concentrically arranged with the compression valve.

According to one embodiment, the valve arrangement comprises a second check valve, wherein the first check valve is arranged to allow a fluid flow through the compression chamber port at a predetermined pressure level and the second check valve is arranged to allow a fluid flow through the rebound chamber port at a predetermined second pressure level. The first and/or second check valve may be arranged to enable a fluid to flow fluidly from the serial valve and in parallel with the compression valve into said compression chamber port and rebound chamber port, respectively.

According to one embodiment, the first shim stack is provided with a through-hole, which through-hole fluidly leads to the first adjustable bleed valve. The shim stack and the first adjustable bleed valve may be concentrically arranged. By this, the valve arrangement may result in a more compact solution.

According to a second aspect of the invention, a shock absorber is provided. The shock absorber comprises a cylinder, a moveable piston arranged in the cylinder and dividing the cylinder space into a compression chamber and a rebound chamber, and a valve arrangement according to the first aspect of the invention or any embodiments thereof.

According to one embodiment, the shock absorber is a twin-tube shock absorber, and the valve arrangement comprises a rebound chamber port fluidly connected to the rebound chamber of the shock absorber.

According to a third aspect of the invention, a method for controlling a fluid flow in a shock absorber from a compression chamber towards a reservoir is provided. The method comprises the steps of: throttling a fluid flow from the compression chamber at a first throttling passage; controlling, in a parallel flow to the first throttling passage, the fluid flow from the compression chamber with a first pressure responsive valve; and downstream, in a compression stroke, of said throttling passage and first pressure responsive valve further: throttling the fluid flow towards the reservoir at a second throttling passage and; controlling, in a parallel flow to the second throttling passage, the fluid flow towards the reservoir with a second pressure responsive valve.

According to one embodiment, first and/or second pressure responsive valve is a spring biased poppet valve or a shim stack. According to one embodiment, the first and/or second throttling passage is provided by means of a respective first and/or second adjustable bleed valve. The method may comprise a step of adjusting either the first and/or second adjustable bleed valve to control the damping characteristics enabled by a valve arrangement according to the first aspect of the invention or any embodiments thereof.

Although a plurality of aspects of the invention and embodiments thereof have been summarized above, it should be understood that they can be combined unless obviously mutually exclusive. The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1 shows a schematic illustration of a valve arrangement according to one embodiment of the invention when arranged to a shock absorber;
Fig. 2 shows damping force characteristics achieved by the present invention according to one embodiment in relation to damping force characteristics achieved by a prior art solution;
Fig. 3 shows a perspective view of a valve arrangement according to one embodiment of the invention when arranged to a shock absorber;
Fig. 4 shows a first perspective cross-sectional view of the valve arrangement according to one embodiment of the invention;
Fig. 5 shows a second perspective cross-sectional view of the valve arrangement according to one embodiment of the invention;
Fig. 6 shows a close-up perspective cross-sectional view of the valve arrangement according to one embodiment of the invention;
Fig. 7 shows a perspective view of the second adjustable bleed valve according to one embodiment of the invention;
Fig. 8 shows a perspective cross-sectional view of the first adjustable bleed valve according to one embodiment of the invention;

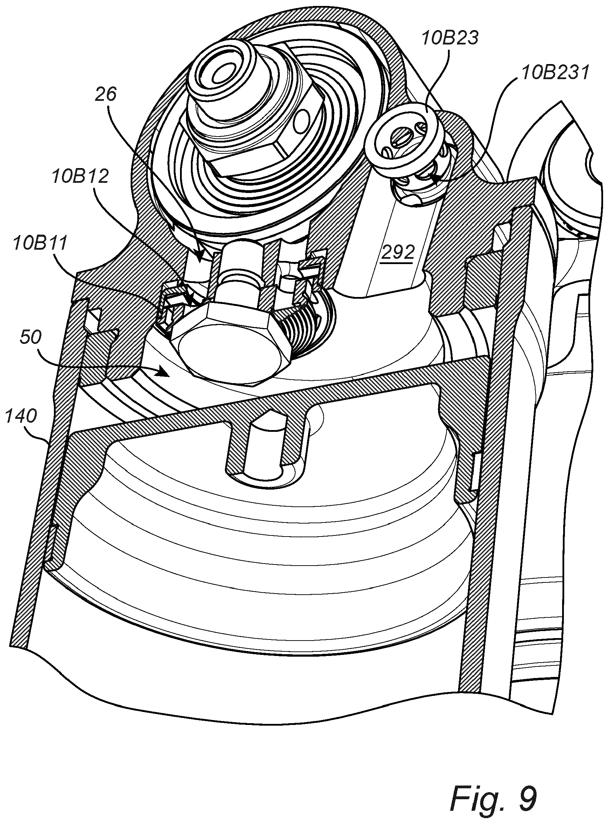

Fig. 9 shows a perspective cross-sectional view of the serial valve according to one embodiment of the invention;
Fig. 10 shows a perspective cross-sectional view of the valve arrangement according to one embodiment of the invention;

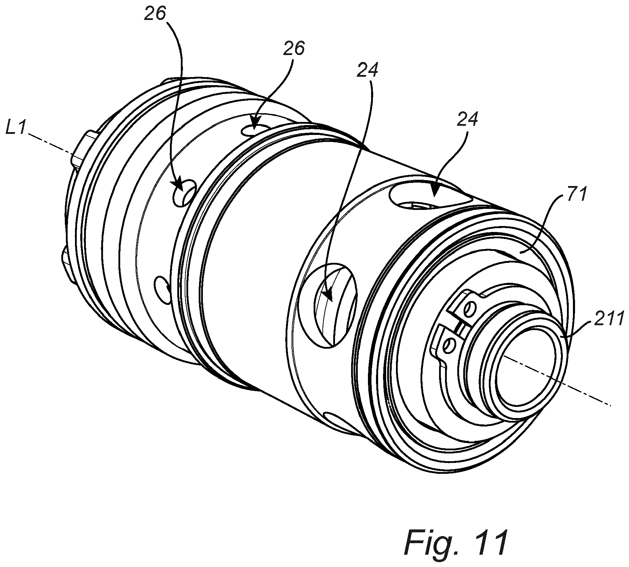

Fig. 11 shows a perspective view of some components of the valve arrangement according to one embodiment of the invention;
Fig. 12A shows a close-up perspective cross-sectional view of the valve arrangement according to one embodiment of the invention;
Fig. 12B shows a close-up perspective cross-sectional view of the valve arrangement according to one embodiment of the invention;
Fig. 13 shows an illustrative chart of the method for controlling a fluid flow in a shock absorber according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

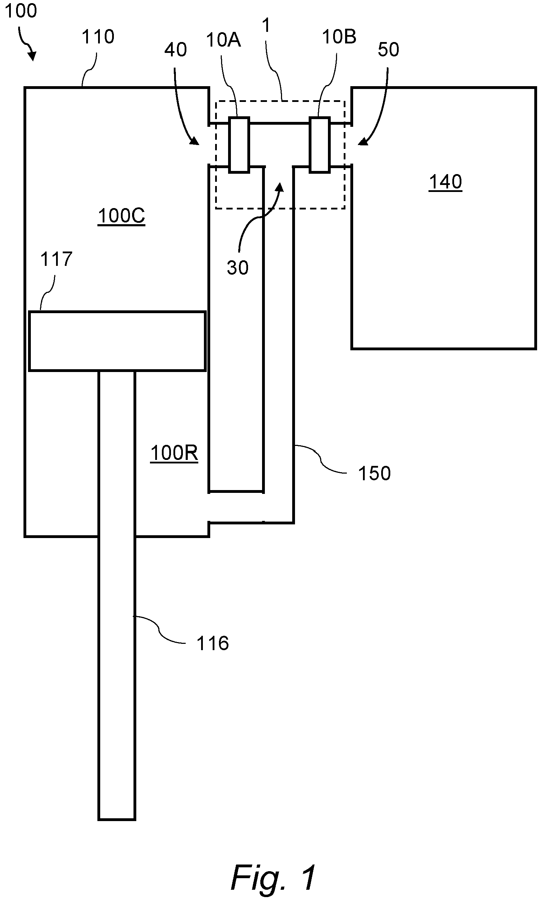

Fig. 1 shows a schematic illustration of a valve arrangement 1 according to one embodiment of the invention when arranged to a shock absorber 100. The valve arrangement 1 comprises a compression valve 10A and a serial valve 10B fluidly connected in series with the compression valve 10A. The compression valve 10A is fluidly connected to a compression chamber 100C of a shock absorber 100 via a compression chamber port 40. The serial valve 10B is fluidly connected to the reservoir 140 via the reservoir port 50. During a compressions stroke, the piston rod 116 moves in the cylinder 110 so that the piston 117 contracts the compression chamber 100C, thereby moving fluid in the compression chamber 100C through the compression port 40 into the compression valve 10A, through the serial valve 10B and into the reservoir 140. During the rebound stroke, the piston rod 116 moves in the cylinder 110 so that the piston 117 contracts the rebound chamber 100R, thereby consequently causing fluid from the reservoir 140 to move towards the compression chamber 100C through the valve arrangement 1.

Further, the compression valve 10A comprises a first pressure responsive valve 10A1 and a first throttling passage 10A2 fluidly arranged in parallel with the first pressure responsive valve 10A1. The first pressure responsive valve 10A1 may be a spring biased poppet valve or a shim stack. The first throttling passage 10A2 may be a fixed orifice or a bleed valve orifice. The first throttling passage 10A2 may be provided by a first adjustable bleed valve 10A20.

The serial valve 10B comprises a second pressure responsive valve 10B1 and a second throttling passage 10B2 fluidly arranged in parallel with the second pressure responsive valve 10B2. The second pressure responsive valve 10B1 may be a spring biased poppet valve or a shim stack. The second throttling passage 10B2 may be a fixed orifice or a bleed valve orifice. The second throttling passage 10B2 may be provided by a second adjustable bleed valve 10B20.

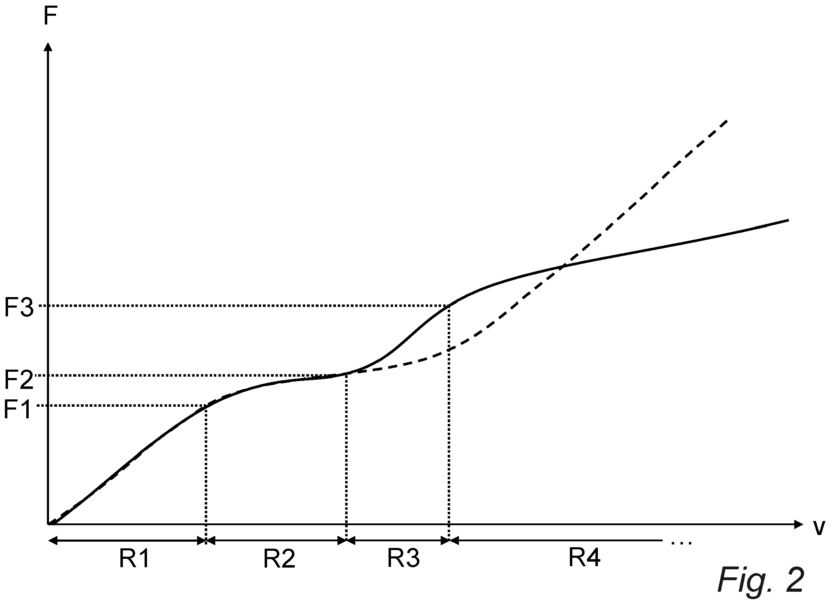

By this valve arrangement 1, an improved damping force characteristic is achieved. This is illustrated in Fig. 2, wherein the damping force characteristic relative stroke speed achieved by the present invention is shown as a solid line, and the damping force characteristic relative stroke speed of a conventional valve arrangement with a dedicated bleed valve for high stroke speed region is shown as a dashed line. As shown in Fig. 2, the damping force characteristic of the present invention is divided into four damping force regions: a first region R1 of a rapidly increasing damping force, a second region R2 of less rapidly increasing damping force, a third region R3 of rapidly increasing damping force, and a fourth region R4 of less rapidly increasing damping force.

The characteristics of the first damping force region R1 is due to the fluid flow at low stroke speeds being throttled by the first throttling passage 10A2 of the compression valve 10A. As the stroke speed increases, the pressure builds up rapidly, consequently resulting in the damping force increasing rapidly in the first damping force region R1. The pressure continues to build-up rapidly to a first predetermined pressure threshold at which the first pressure responsive valve is configured to open or configured to open a greater extent. This corresponds to the damping force F1 shown in Fig. 2.

In the second damping force region R1, the first pressure responsive valve 10A1 mitigates the further pressure build-up so that the pressure builds less rapidly relative the pressure build-up in the first damping force region R1. This consequently slows the damping force increase in the second damping force region R2 as compared to the damping force increase in the first damping force region R1.

The characteristics of the third damping force region R3 is due to the fluid flow being throttled by the second throttling passage 10B2 of the serial valve 10B, the effect of which becomes significant at a second predetermined pressure level (corresponding to damping force F2) and which effect consequently leads to a rapid pressure build-up and thereby a rapidly increasing damping force in the third damping force region R3. The pressure continues to build rapidly until a third predetermined pressure threshold (corresponding to damping force F3) is reached at which the second pressure responsive valve 10B1 is configured to open or configured to open a greater extent.

In the fourth damping force region R4, the second pressure responsive valve 10B1 mitigates the further pressure build-up so that the pressure builds less rapidly relative the pressure build-up in the third damping force region R3. This consequently slows the damping force increase in the fourth damping force region R4 as compared to the damping force increase in the third damping force region R3.

Thus, the current valve arrangement 1 enables a solution that may prevent a runaway damping force in the high or higher stroke speed interval, and also provide overall improved damping force characteristics in the high stroke speed interval, without sacrificing desired damping force characteristics in the low- to intermediate stroke speed intervals. Moreover, since the runaway damping force at higher stroke speeds is mitigated, the present invention provides a solution to the uncontrolled force spikes present in conventional solutions.

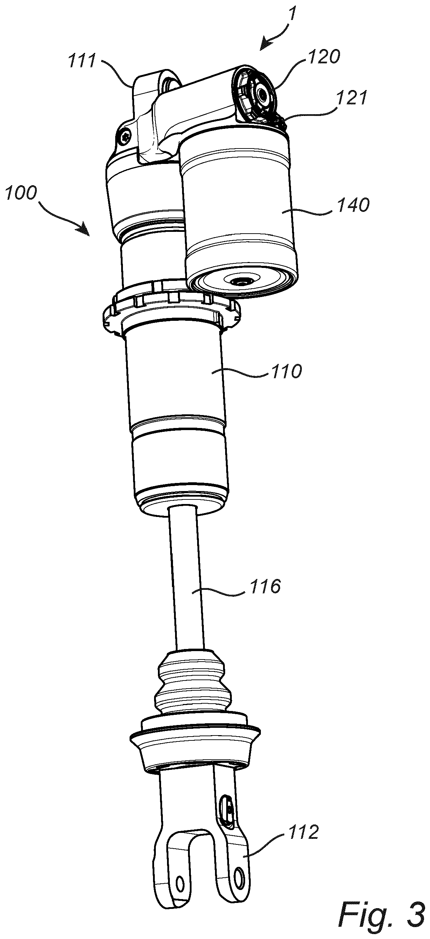

Fig. 3 shows a perspective view of a valve arrangement 1 according to one embodiment of the invention when arranged to a shock absorber 100. The shock absorber 100 comprises a cylinder 110, a piston rod 116, a valve arrangement 1, a reservoir 140. Moreover, the shock absorber comprises lugs 111, 112 for arranging the shock absorber 100 accordingly to a vehicle such as a motor cross.

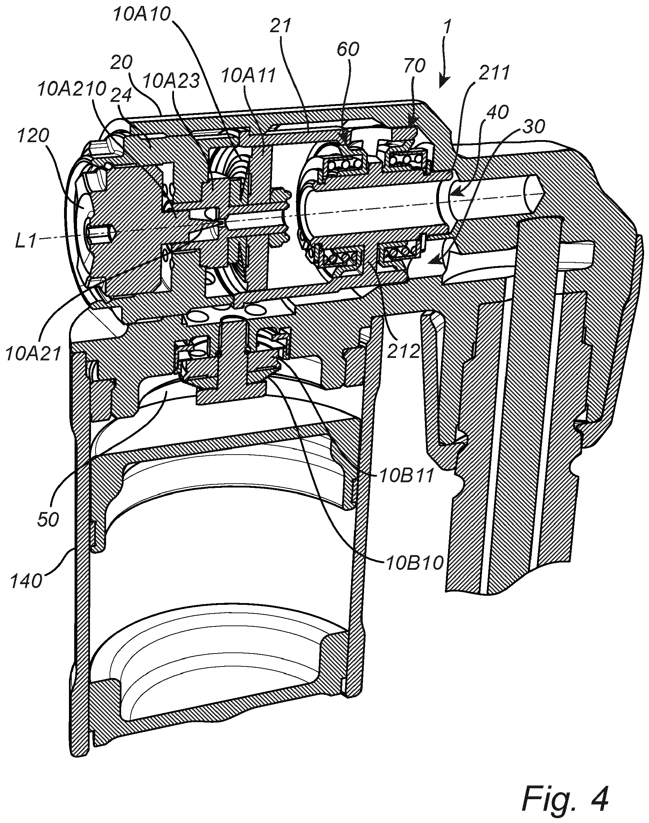

According to one embodiment, both the first pressure responsive valve 10A1 of the compression valve 10A and the second pressure responsive valve 10B1 of the serial valve 10B are shim stacks. Further, both the first throttling passage 10A2 of the compression valve 10A and the second throttling passage 10B2 of the serial valve 10B are provided by adjustable bleed valves. An example of this embodiment is shown in Fig. 4 which shows a first perspective cross-sectional view of the valve arrangement 1 according to one embodiment of the invention. The valve arrangement 1 is fluidly arranged between the cylinder and the reservoir 140. The valve arrangement 1 comprises an inner valve housing 21 having a cylindrical shape extending along a first longitudinal axis L1. In the inner valve housing 21, a tubular portion 211 is arranged. The tubular portion 211 is shaped in size and form to define the compression chamber port 40. The tubular portion 211 is arranged concentrically in the inner valve housing 21 and fixated in place via a rim portion 212 extending radially towards the tubular portion 211.

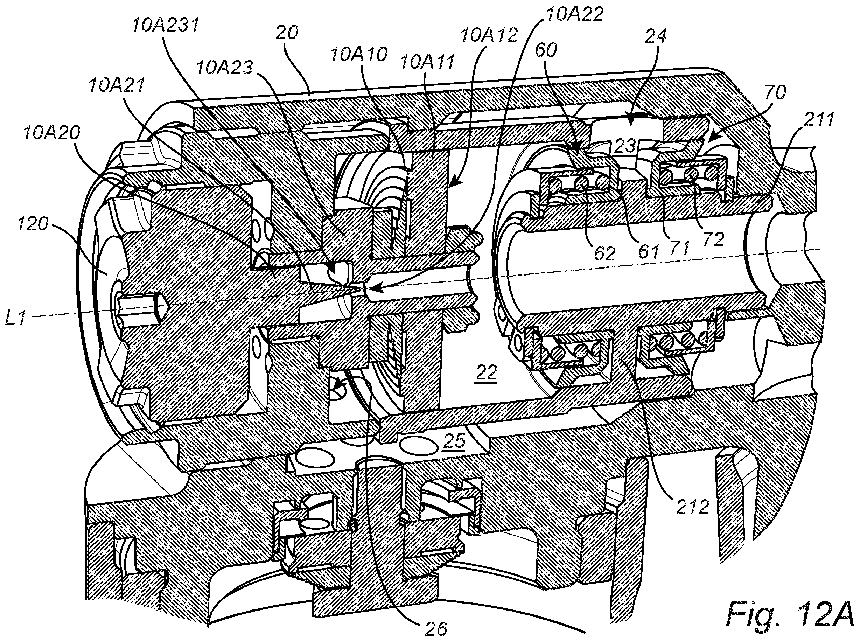

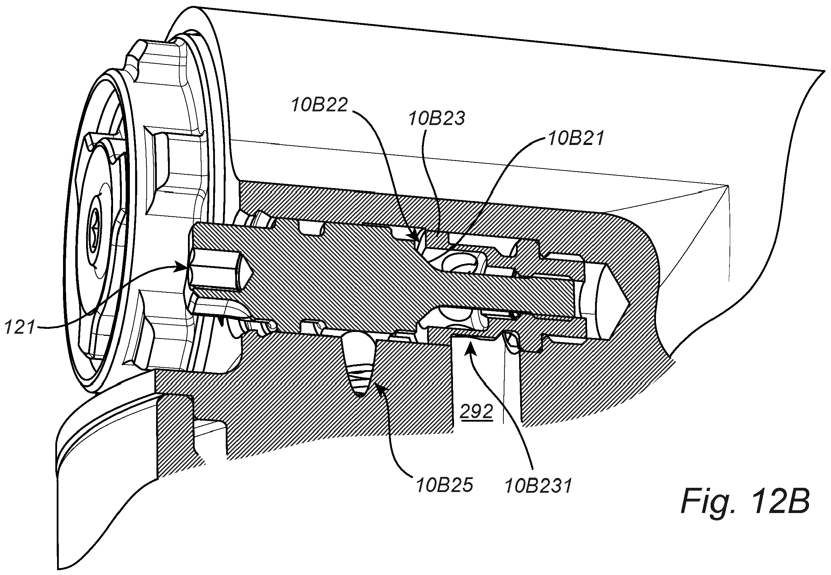

Moreover, in the other end of the inner valve housing 21, the compression valve 10A is arranged. During a compression stroke, the fluid from the compression chamber 100C enter into the valve arrangement 1 via compression chamber port 40 defined by the tubular portion 211. The fluid then reaches the compression valve 10A comprising a first shim stack 10A10 abutting a first shim stack seat 10A11. The first shim stack seat 10A11 defines a plurality of first shim stack seat openings 10A12 through which fluid flows when the shim stack 10A10 is open (see Fig. 12A). The compression valve 10A also comprises a first adjustable bleed valve 10A20. The first adjustable bleed valve comprises a valve member which is axially moveable along the first longitudinal axis L1 to move towards or away from a first bleed valve seat 10A23. The valve member at least comprises a bleed valve needle 10A21 which is axially moveable in an opening of the first bleed valve seat 10A23, thereby together defining a first bleed valve orifice 10A22. The axial position of the bleed valve needle 10A21 relative the first bleed valve seat 10A23 thus controls the size of the first bleed valve orifice 10A22 and consequently the flow flowing therethrough. The bleed valve needle 10A21 is axially moveable by rotating a first rotatable knob 120 about the first longitudinal axis L1. The first rotatable knob 120 is coupled to the bleed valve needle 10A21 via a base member 10A210. The first bleed valve seat 10A23 also comprises radial openings by which fluid may flow out of the first adjustable bleed valve 10A2 once having entered via the first bleed valve orifice 10A22.

The inner valve housing 21 also defines a plurality of compression valve ports 26 by which fluid may flow from the compression valve 10A towards the serial valve 10B. When the fluid passes through the compression valve ports 26, the fluid enters an intermediate cavity 25 formed between the inner valve housing 21 and the valve housing 20, see Fig. 12A.

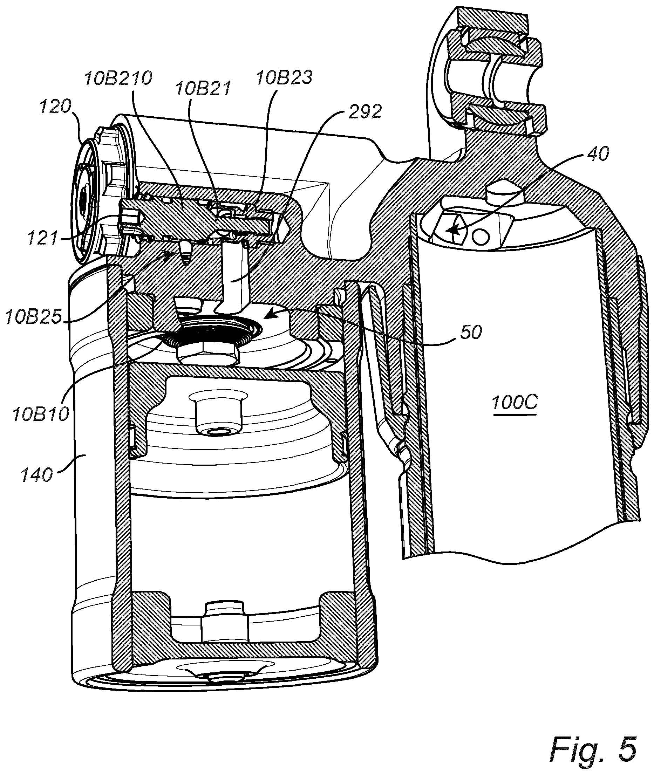

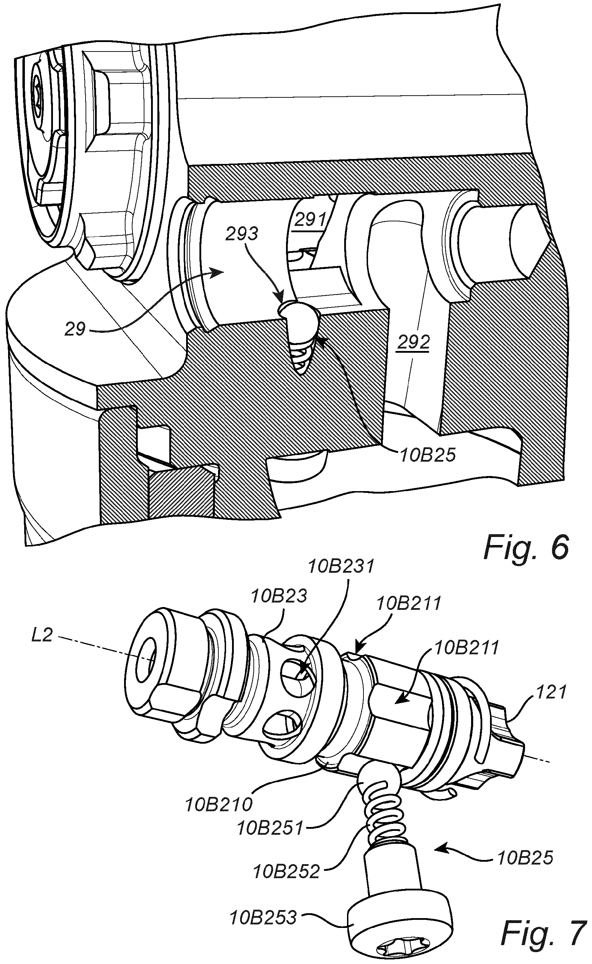

From the intermediate cavity 25, the fluid flows toward the serial valve 10B. The serial valve 10B comprises a second adjustable bleed valve 10B2 and a second shim stack. The second shim stack 10B10 is configured to abut a second shim stack seat 10B11 which defines a plurality of second shim stack seat openings 10B12 through which the fluid may flow through towards the reservoir port 50 when the shim stack is forced to open or open to a greater extent. Fig. 4 and Fig. 12a show a cross-sectional view of the second shim stack 10B10 and the second shim stack seat 10B11. The second adjustable bleed valve 10B2 comprises a valve member and a second bleed valve seat 10B23, see Fig. 5. The second adjustable bleed valve 10B2 is configured to be arranged in an auxiliary channel 29 defined by the valve housing 20. The auxiliary channel 29, as shown in Fig. 6, extends between an auxiliary channel inlet 291 which opens to the intermediate cavity 25 and an auxiliary channel outlet 292 which opens to the reservoir port 50.

The second adjustable bleed valve 10B20 is shown in Fig. 7. The second adjustable bleed valve 10B20 is elongate in shape and extends along a second longitudinal axis L2. The second adjustable bleed valve 10B20 comprises a valve member axially moveable relative a second bleed valve seat 10B23. The valve member at least comprises a second bleed valve needle 10B12 configured to extend into an opening of the second bleed valve seat 10B20. By moving the valve member axially along the second longitudinal axis L2, the second bleed valve orifice 10B22 between the second bleed valve needle 10B21 and the second bleed valve seat 10B23 may be varied in size to adjust the fluid flow therethrough. The second bleed valve seat 10B23 comprises a plurality of circumferentially arranged valve seat openings 10B231 by which the fluid flows out of the adjustable bleed valve 10B20. Moreover, the axial position of the second bleed valve needle 10B21 is adjusted by rotating a second knob 121. The valve member and the second knob 121 are coupled to each other by means of a base member 10B210. Thus, during the compression stroke, the fluid flows through the serial valve, via the second adjustable bleed valve 10B20 and the shim stack 10B10 and arrives at the reservoir port 50, and thereafter into the reservoir 140.

Thus, the valve arrangement 1 may when arranged to a shock absorber 100 provide a damping force characteristic as shown in Fig. 2.

In a further embodiment, the valve arrangement comprises a first check valve 60. The first check valve 60 is arranged to facilitate fluid to flow from the reservoir chamber 140 to the compression chamber 100C. The first check valve 60 comprises a first check valve member 61 and a first check valve spring 62 configured to bias the first check valve member 61 into a closing position. When the pressure reaches a predetermined pressure level, the first check valve 60 opens. In the exemplary embodiment shown in Figs. 4 and 12A. The first check valve 60 is arranged concentrically around the tubular portion 211 in the inner valve housing 21. The first check valve 60 is fluidly connected with the intermediate cavity defined between the inner valve housing 21 and the valve housing 20. More specifically, the fluid reaches a check valve cavity 23 via ports 24. When the first check valve 60 opens, the fluid is enabled to flow into the inner valve housing cavity 22 and therefrom through the tubular portion 211 towards the compression chamber port 40.

In a further embodiment, the valve arrangement 1 comprises a rebound chamber port 30. The rebound chamber port 30 is configured to allow fluid to flow towards the rebound chamber 100R of a shock absorber 100. This rebound chamber port 30 is shown in e.g. Fig. 4. In one exemplary embodiment, the valve arrangement 1 is configured to be arranged to a twin-tube shock absorber. The rebound chamber port 30 may be fluidly connected to the outer tube of the twin-tube shock absorber. The rebound chamber port 30 is fluidly connected to the intermediate cavity 25. Thus, the rebound chamber port 30 is fluidly connected in between the compression valve 10A and the serial valve 10B.

In a further embodiment, the valve arrangement 1 comprises a second check valve 70. The second check valve 70 comprises a second check valve member 71 and a second check valve spring 72. The second check valve spring 72 is configured to bias the second check valve member 71 to a close position. When the pressure reaches a predetermined pressure level, the second check valve 70 opens. The second check valve 70 is arranged to open up towards the rebound chamber port 30. Thus, fluid from the intermediate cavity 25 may flow to the rebound chamber port 30 via check valve cavity ports 24 and check valve cavity 23. This if also illustrated in Fig. 1 wherein the rebound chamber port 30 is connected to the rebound chamber 100R via the channel 150. In some embodiments, this channel may be constituted by an outer cylinder chamber in a twin-tube setup.

Further, the first check valve 60 and the second check valve 70 may be arranged coaxially as seen in Figs. 4 and 12A. The first and second check valves 60, 70 may be configured to move in opposite directions when opening.

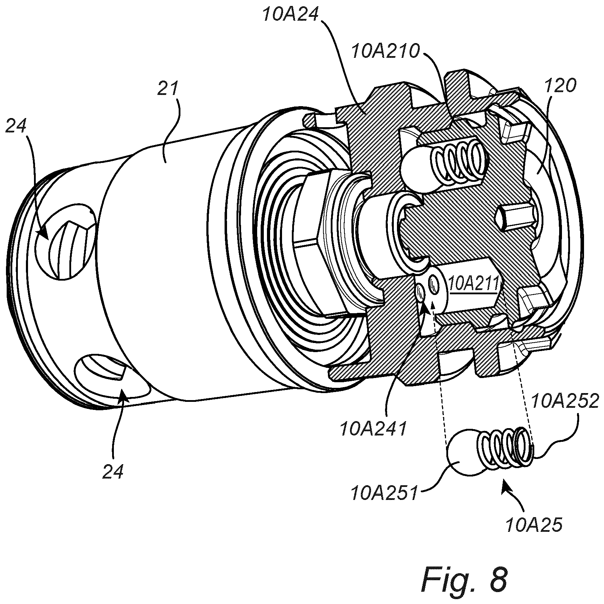

In one embodiment, the first adjustable bleed valve 10A20 is configured to be maintained in any of a predetermined set of adjusting position by means of a ball spring 10A25. The ball spring 10A25 comprises a ball member 10A251 and a spring member 10A252. The spring member 10A252 is configured to bias the ball member 10A252 towards any of a set of coupling member recesses 10A241 provided on a coupling member 10A24 as seen in Fig. 8. The coupling member 10A24 may constitute as a part of the inner valve housing 21. The ball spring 10A25 is arranged in a base member 10A210 in specific base member cavities 10A211. The number of predetermined adjusting positions is defined by the number of recesses present on the coupling member 10A24. Further, in the embodiment shown in Fig. 8, the valve arrangement 1 comprises a pair of ball springs 10A25.

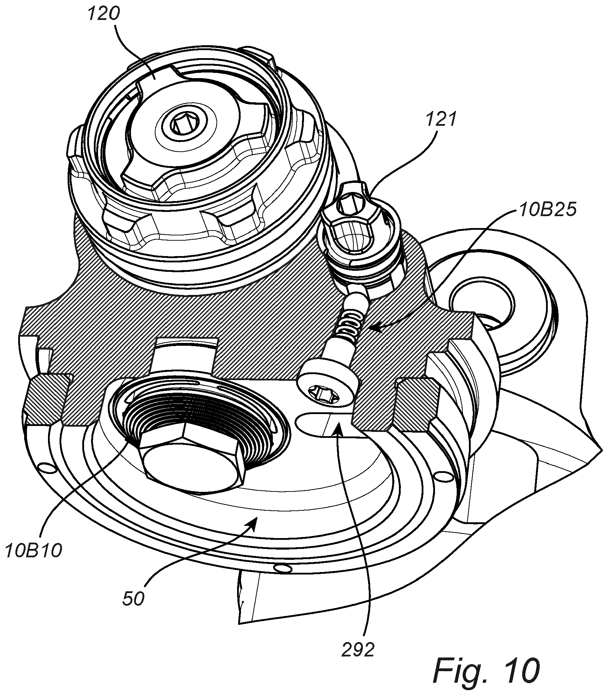

In one embodiment, the second adjustable bleed valve 10B20 is configured to be maintained in any of a predetermined set of adjusting positions by means of a ball spring 10B25. The ball spring 10B25 comprises a ball member 10B251 and a spring member 10B252. The spring member 10B252 is configured to bias the ball member 10B251 towards any of a set of base member grooves 10B211 arranged on the base member 10B210, as is illustrated in Figs. 7, 10 and 12B. The ball spring 10B25 is configured to be arranged in an auxiliary channel cavity 293 which can be seen in Fig. 6.

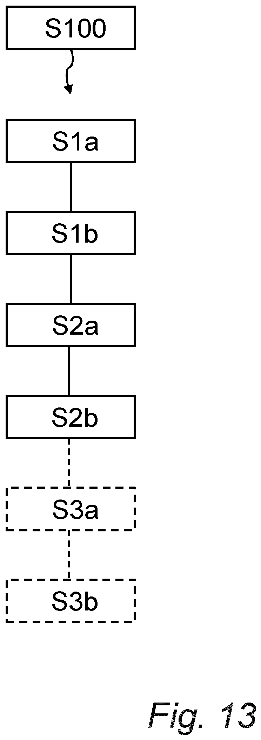

Fig. 13 shows an illustrative chart of the method S100 for controlling a fluid flow in a shock absorber 100 from a compression chamber 100C towards a reservoir 140 in accordance with one embodiment of the invention. The method S100 comprises the steps of: throttling S1a a fluid flow from the compression chamber 100C at a first throttling passage 10A2; controlling S1b, in a parallel flow to the first throttling passage, the fluid flow from the compression chamber 100C with a first pressure responsive valve 10A1; and downstream, in a compression stroke, of said throttling passage and first pressure responsive valve further: throttling S2a the fluid flow towards the reservoir 140 at a second throttling passage 10B2 and; controlling S2b, in a parallel flow to the second throttling passage, the fluid flow towards the reservoir with a second pressure responsive valve 10B1. By this method, the damping force characteristics shown in Fig. 2 may be achieved.

According to one embodiment, the first and/or second pressure responsive valve is a spring biased poppet valve or a shim stack. According to one embodiment, the first and/or second throttling passage is provided by means of a respective first and/or second adjustable bleed valve. The method S100 may comprise a step S3a, S3b of adjusting either the first and/or second adjustable bleed valve to control the damping characteristics enabled by a valve arrangement 1 according to the first aspect of the invention or any embodiments thereof.

In the drawings and specification, there have been disclosed preferred embodiments and examples of the invention and, although specific terms are employed, they are used in a generic and descriptive sense only and not for the purpose of limitation, the scope of the invention being set forth in the following claims.

### List of References

L1 - First longitudinal axis
L2 - Second longitudinal axis
1 - Valve arrangement
10A - Compression valve
10A1 - First pressure responsive valve
10A10 - First shim stack
10A11 - First shim stack seat
10A12 - First shim stack seat openings
10A2 - First throttling passage
10A20 - First adjustable bleed valve
10A21 - First bleed valve needle
10A210 - Base member
10A211 - Base member cavities
10A22 - First bleed valve orifice
10A23 - First bleed valve seat
10A231 - Valve seat openings
10A24 - Coupling member
10A241 - Coupling member recesses
10A25 - Ball spring
10A251 - Ball member
10A252 - Spring member
10B - Serial valve
10B1 - Second pressure responsive valve
10B10 - Second shim stack
10B11 - Second shim stack seat
10B12 - Second shim stack seat openings
10B2 - Second throttling passage
10B20 - Second adjustable bleed valve
10B21 - Second bleed valve needle
10B210 - Base member
10B211 - Base member grooves
10B22 - Second bleed valve orifice
10B23 - Second bleed valve seat
10B231 - Valve seat openings
10B24 - Coupling member
10B25 - Ball spring
10B251 - Ball member
10B252 - Spring member
10B253 - Fastening member
20 - Valve housing
21 - Inner valve housing
211 - Tubular portion
212 - Rim portion
22 - Inner valve housing cavity
23 - Check valve cavity
24 - Check valve cavity ports
25 - Intermediate cavity
26 - Compression valve ports
27, 28 - Serial valve ports
29 - Auxiliary channel
291 - Auxiliary channel inlet
292 - Auxiliary channel outlet
293 - Auxiliary channel cavity
30 - Rebound chamber port
40 - Compression chamber port
50 - Reservoir port
60 - First check valve
61 - First check valve member
62 - First check valve spring
70 - Second check valve
71 - Second check valve member
72 - Second check valve spring
100 - Shock absorber
100C - Compression chamber
100R - Rebound chamber
110 - Shock absorber housing
111, 112 - Lugs
113 - Damper body
114 - Outer cylinder
115 - Inner cylinder
116 - Piston rod
117 - Piston
118 - Piston valve
119 - Bottom valve
120 - First knob
121 - Second knob
140 - Reservoir
S100 - Method for controlling a fluid flow in a shock absorber
S1a, S1b, S2a, S2b - Method steps

## Claims

1. Valve arrangement (1) for a shock absorber (100), the valve arrangement (1) comprising:
a compression valve (10A) configured to be fluidly connected to a compression chamber (100C) of a shock absorber (100), the compression valve (10A) including a first pressure responsive valve (10A1) and a first throttling passage (10A2) fluidly arranged in parallel with the first pressure responsive valve (10A1);
a serial valve (10B) fluidly connected in series with the compression valve (10A) and configured to be fluidly connected to a reservoir (140) of the shock absorber (100), the serial valve (10B) including a second pressure responsive valve (10B1) and a second throttling passage (10B2) fluidly arranged in parallel with the second pressure responsive valve (10B1).

2. Valve arrangement (1) according to claim 1, wherein at least one of the first and second pressure responsive valves (10A1, 10B1) is a spring-loaded poppet or a shim stack.

3. Valve arrangement (1) according to claim 1, wherein both the first and second pressure responsive valves (10A1, 10B1) are a respective first and second shim stack.

4. Valve arrangement (1) according to claim 1, wherein the first pressure responsive valve is configured to open at a first predetermined pressure threshold and the second pressure responsive valve is configured to open at a second predetermined pressure threshold, wherein the second predetermined pressure threshold is larger than the first predetermined pressure threshold.

5. Valve arrangement (1) according to claim 1, wherein the second throttling passage (10B2) is provided to enable a cross-sectional flow that is larger than the cross-sectional flow enabled by the first throttling passage (10A2).

6. Valve arrangement (1) according to any preceding claims, wherein at least one of the first and second throttling passages (10A2, 10B2) is provided by an adjustable bleed valve (10A20, 10B20) comprising a valve member axially moveable about a respective longitudinal axis (L1, L2) relative a valve seat.

7. Valve arrangement (1) according to claim 6, wherein both the first and second throttling passages (10A2, 10B2) are provided by a respective first and second adjustable bleed valve (10A20, 10B20) comprising a valve member axially moveable along a respective first and second longitudinal axis (L1, L2) relative a respective first and second valve seat.

8. Valve arrangement (1) according to claim 7, wherein the first and second adjustable bleed valves (10A20, 10B20) are provided so that the first and second longitudinal axes (L1, L2) are parallel.

9. Valve arrangement (1) according to any of claims 6-8, wherein at least one adjustable bleed valve (10A20, 10B20) is configured to be maintained in any of a predetermined set of adjusting positions by means of a ball spring (10A25, 10B25).

10. Valve arrangement (1) according to any preceding claims, comprising a rebound chamber port (30) fluidly provided in-between the compression valve (10A) and the serial valve (10B) and configured to enable fluid connection to a rebound chamber (R) of the shock absorber (100).

11. Valve arrangement (1) according to any preceding claims, comprising a first check valve (60) fluidly arranged in parallel with the compression valve (10A).

12. Valve arrangement (1) according to claim 11, comprising a housing (20) defining a compression chamber port (40), a reservoir port (50), a first and a second parallel channel extending between the compression chamber port (40) and the reservoir port (50) respectively, wherein the compression valve (10A) is fluidly arranged in the first channel and the first check valve (60) is arranged to allow fluid flow through the second channel at a predetermined first pressure level.

13. Valve arrangement (1) according to claim 12, comprising a second check valve (70), wherein the first check valve (60) is arranged to allow a fluid flow through the compression chamber port (40) at a predetermined first pressure level and the second check valve (70) is arranged to allow a fluid flow through the rebound chamber port (30) at a predetermined second pressure level.

14. Shock absorber (100) comprising a cylinder, a moveable piston arranged in the cylinder and dividing the cylinder space into a compression chamber (C) and a rebound chamber (R), and a valve arrangement (1) according to any of claims 1 - 14.

15. Method for controlling a fluid flow in a shock absorber (100) from a compression chamber towards a reservoir (140), the method comprising:
throttling (S1a) a fluid flow from the compression chamber (100C) at a first throttling passage (10A2);
controlling (S1b), in a parallel flow to the first throttling passage, the fluid flow from the compression chamber (100C) with a first pressure responsive valve (10A1);
and downstream, in a compression stroke, of said throttling passage and first pressure responsive valve further:
throttling (S2a) the fluid flow towards the reservoir (140) at a second throttling passage (10B2) and;
controlling (S2b), in a parallel flow to the second throttling passage, the fluid flow towards the reservoir with a second pressure responsive valve (10B1).
